# EUROPEAN PATENT APPLICATION

(11) **EP 4 693 083 A1**
(43) Date of publication of application: **11.02.2026**
(21) Application number: 25192184.7
(22) Date of filing: 28.07.2025
(51) Int. Cl.: G06F 21/55, G06F 21/62, H04L 9/40

(54) **METHODS AND SYSTEMS FOR RESTRICTING CLOUD RESOURCE NAMES**

(30) Priority: 30.07.2024 US 202418788279
(71) Applicant: Google LLC, Mountain View, CA 94043 (US)
(72) Inventor: NAMER, Assaf, Mountain View, CA, 94043 (US); MALTZMAN, Brandon, Mountain View, CA, 94043 (US); ROBINSON, Ahmad, Mountain View, CA, 94043 (US); GREMAUD, Daniel, Mountain View, CA, 94043 (US)
(74) Representative: Betten & Resch

(57) **Abstract**

The present disclosure provides a method and system for automatically restricting cloud resource names based on their semantic similarity to a set of keywords. The system may include one or more processors to receive a user input including a candidate name for a cloud resource of a cloud system, provide a similarity check query to a vector matching engine containing a dataset of keywords derived from cloud system, the similarity check query including the candidate name, receive a score indicating a degree of similarity between the candidate name and at least one keyword of the dataset contained in the vector matching engine, compare the score to a predetermined threshold range, reject the candidate name in response to the score being outside the predetermined threshold range, and assign the candidate name to the cloud resource if the score is within the predetermined threshold range.

## Description

### BACKGROUND

Cloud systems are potential targets for cyber attacks. Such attacks may begin with reconnaissance activities to gather information about a potential target, including identifying vulnerabilities, finding entry points, and understanding the target's infrastructure. The collected information may be used to identify valuable targets or systems. Next, an attacker may aim to map out a target's environment, including resource names, network configurations, system types, user accounts, and other relevant information. This information can help the attacker make informed decisions about the next steps in the attack chain, such as where to focus efforts and resources in order to maximize the value of an attack.

In a cloud system, cloud resource names that reveal information about the type of data stored in those resources can increase security risks by providing a clear target for a potential attacker. For example, a resource name identifying a client by name or that the resource relates to sensitive information, such as the name "FinancialReports2022," could potentially expose the location of sensitive financial data to attackers, and the attackers can then focus their efforts on exploiting vulnerabilities related to financial systems in the network.

One way to mitigate the risk imposed by cloud resource names is to implement a naming convention that doesn't disclose the nature of the data or service being stored. However, internal names that may seem random can often still imply the nature of data stored by the service or workload. For example, consider a SaaS provider that names its databases and data lakes based on a code project name (e.g., project_x_datalake). An attacker can still use open-source intelligence (OSINT) via gathering and social engineering to collect both publicly and privately available information about the target, such as information about code project names, and then use the gathered information to inform decisions on which of the target's resources to focus efforts.

### BRIEF SUMMARY

The present disclosure provides a solution for preventing cloud users from using resource names related to the organization's sensitive information. In addition to restricting resources from containing well-known specific words or phrases that relate to sensitive information (e.g., sensitive, classified, secret), the solution of the present disclosure can restrict the resources from containing less-known words or phrases that can be found in external sources such as public data or internal sources such as internal websites, forums, and communication services. The present disclosure provides a method and system for automatically restricting cloud resource names based on their semantic similarity to a set of keywords.

One aspect of the disclosure is directed to a method including: receiving a user input including a candidate name for a system resource of a system; providing a similarity check query to a vector matching engine containing a dataset of keywords derived from the system, the similarity check query including the candidate name; receiving a score from the vector matching engine, the score indicating a degree of similarity between the candidate name and at least one keyword of the dataset contained in the vector matching engine; comparing the score to a predetermined threshold range; and rejecting the candidate name in response to the score being outside the predetermined threshold range.

In some examples, receiving the user input may involve receiving an application programming interface (API) request at an endpoint to which the system resource is assigned, and rejecting the candidate name may involve sending a return code to the endpoint, the return code indicating failure of the API request.

In some examples, the method may further include executing, by the vector matching engine, a similarity check in response to the similarity check query. Executing the similarity check may include: for each keyword included in the dataset of keywords, determining a degree of similarity between the keyword and the candidate name; determining a keyword for which the degree of similarity is highest; and determining the score based on the degree of similarity of the determined keyword.

In some examples, the user input may be received from a client device, and the method may further include outputting an alert message to the client device, the alert message indicating that the candidate name is invalid.

In some examples, the alert message may further include an alternative candidate name that, when provided to the vector matching engine, returns a score that is within the predetermined threshold range.

In some examples, the method may further include receiving a second user input including a second candidate name for the system resource; providing the second candidate name to the vector matching engine; receiving a second score from the vector matching engine, the second score indicating the degree of similarity between the second candidate name and at least one keyword of the dataset contained in the vector matching engine; comparing the second score to the predetermined threshold range; and assigning the candidate name to the system resource in response to the score being within the predetermined threshold value.

In some examples, receiving the user input may involve receiving an application programming interface (API) request at an endpoint to which the system resource is assigned, and assigning the candidate name to the system resource may involve sending a return code to the endpoint indicating to continue the processing of the API request.

In some examples, the method may further include constructing the dataset of keywords derived from at least one of the system and one or more resources external to the system.

In some examples, the dataset of keywords are derived at least in part from the one or more services included in the system.

In some examples, constructing the dataset of keywords may involve: assigning a web crawler service to scan at least one of the system and one or more resources external to the system; receiving indexed content scanned by the web crawler service; and extracting one or more keywords from the indexed content; and constructing the dataset of keywords from the extracted one or more keywords.

In some examples, extracting one or more keywords from the indexed content may involve at least one of the following solutions: a rapid automatic keyword extraction (RAKE) algorithm; a machine learning algorithm trained on a prelabeled dataset manually annotated with relevant keywords; an unsupervised machine learning algorithm; or a natural language processing tool.

In some examples, the method may further include, at a time after constructing the dataset of keywords, updating the dataset of keywords by repeating the assigning of the web crawler service, the receiving of the indexed content, and the extracting of one or more keywords from the indexed content.

Another aspect of the disclosure is directed to a system including one or more processors and memory having stored thereon instructions that, when executed, cause the one or more processors to: receive a user input including a candidate name for a system resource of a system; provide a similarity check query to a vector matching engine containing a dataset of keywords derived from system, the similarity check query including the candidate name; receive a score from the vector matching engine, the score indicating a degree of similarity between the candidate name and at least one keyword of the dataset contained in the vector matching engine; compare the score to a predetermined threshold range; reject the candidate name in response to the score being outside the predetermined threshold range; and assign the candidate name to the system resource in response to the score being within the predetermined threshold range.

In some examples, the similarity check query may be configured to cause the vector matching engine to: for each keyword included in the dataset of keyword, determine a degree of similarity between the keyword and the candidate name; determine a keyword for which the degree of similarity is highest; and determine the score based on the degree of similarity of the determined keyword.

In some examples, the instructions may cause the one or more processors to output an alert message to the client device in response to the score being outside the predetermined threshold range, the alert message indicating that the candidate name is invalid.

In some examples, the alert message may further include an alternative candidate name that, when provided to the vector matching engine, returns a score that is within the predetermined threshold range.

In some examples, the instructions may cause the one or more processors to: assign a web crawler service to scan internal services of the system; receive indexed content of the internal services from the web crawler service; and extract one or more keywords from the indexed content; and construct the dataset of keywords from the extracted one or more keywords.

In some examples, the instructions may cause the one or more processors to extract one or more keywords from the indexed content using at least one of the following solutions: a rapid automatic keyword extraction (RAKE) algorithm; a machine learning algorithm trained on a prelabeled dataset manually annotated with relevant keywords; an unsupervised machine learning algorithm; or a natural language processing tool.

A further aspect of the disclosure is directed to a cloud platform including: a plurality of cloud endpoints, each cloud endpoint configured to perform a respective cloud service; cloud resources, wherein each cloud resource is assigned to a respective cloud endpoint for performing the respective cloud service of the respective cloud endpoint; and a cloud name evaluation service configured to: receive a user input including a candidate cloud resource name; provide a similarity check query to a vector matching engine containing a dataset of keywords derived from cloud system, the similarity check query including the candidate cloud resource name; receive a score from the vector matching engine, the score indicating a degree of similarity between the candidate cloud resource name and at least one keyword of the dataset contained in the vector matching engine; and accepting or rejecting the candidate cloud resource name for use in the cloud platform based on the score.

In some examples, the user input may further specify a cloud resource endpoint to which the cloud resource is to be assigned, and the cloud name evaluation may be further configured to transmit an instruction to the specified cloud resource endpoint to continue or stop generating the cloud resource with the candidate cloud resource name based on whether the candidate cloud resource name is accepted or rejected.

### BRIEF DESCRIPTION OF THE DRAWINGS

Fig. 1 is a block diagram of a system in accordance with an aspect of the disclosure.
Fig. 2 is a block diagram of a computing system that may be included in the system of Fig. 1.
Fig. 3 is a diagram illustrating data flow between components of the system of Fig. 1.
Fig. 4 is a flow diagrams of an example routine in accordance with an aspect of the disclosure.
Figs. 5 and 6 are flow diagrams of example subroutines of the routine of Fig. 4.

### DETAILED DESCRIPTION

### Overview

Preventing cloud users from using names related to the organization's sensitive information may begin with obtaining a list of restricted keywords and phrases. One way of obtaining this list is through a web crawler service that accesses and scans internal and external services and detects any keywords or phrases that exist. A dataset of the keywords and phrases may be constructed from the results of the web crawler service, and specific keywords may be extracted from the dataset. Keywords may include brand names, project names, people's names, and so on. The extracted keywords may be used as the restricted list of keywords and phrases. The list may be inserted and indexed in a similarity matching service, such as a vector matching engine.

Once the similarity matching service receives the extracted keywords, the service can then be leveraged by the system to evaluate proposed names for cloud resources and prevent any unsecure names from being used. For example, if a proposed cloud resource name is determined by the service to be sufficiently semantically similar to any one of the keywords indexed in the similarity matching service, then the proposed name can be rejected. Rejection of the proposed name may be accompanied by one or more additional actions. For instance, an error message or alert may be output, such as to a principal who proposed the rejected resource name. Additionally, or alternatively, an acceptable resource name that is not semantically similar to any one of the keywords indexed in the similarity matching service may be proposed for naming the cloud resource.

The methods and systems described herein can help cloud users to protect sensitive workloads by ensuring that resource names do not reveal information which might be leveraged by adversaries to aid in cyber attacks and data exfiltration attempts. This can help to make data breaches more difficult for adversaries, and may make cloud users feel more secure using the cloud services. The methods and systems may be especially beneficial for well-established clients with known brands, product names, and projects, since cloud resources named after those known keywords may be easier targets for an attacker.

### Example Systems

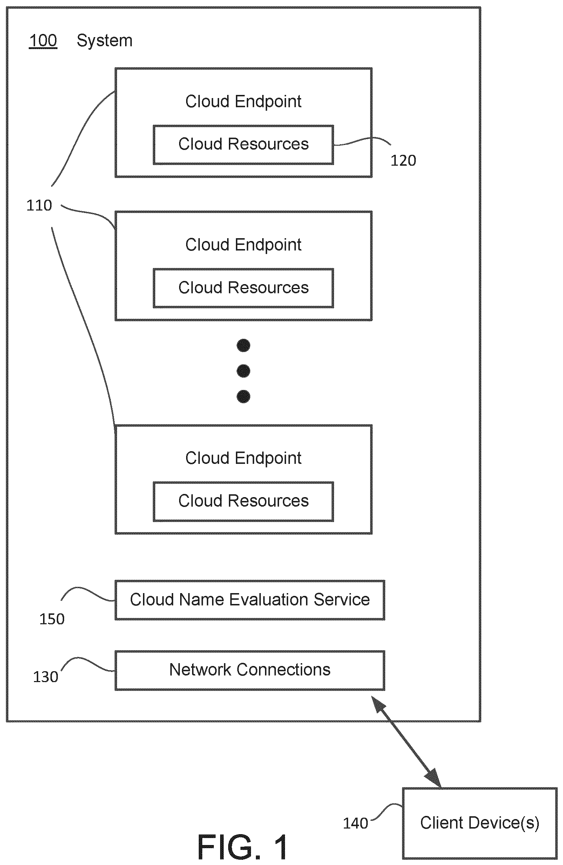

Fig. 1 is a block diagram of an example system 100 in accordance with an aspect of the disclosure. In the example of Fig. 1, the system 100 is a cloud-based system having a plurality of cloud endpoints 110. Each cloud endpoint 110 may be assigned to a different respective service performed in the cloud system 110. For instance, cloud endpoints may include computation services, various storage services, cloud deployment services, service management services, cloud domain name system (DNS) services, and so on. The system 100 may further include cloud resources 120 such as computational resources and storage resources. The resources may be utilized by the various cloud services in order to perform the respective services.

The system 100 may itself be or include one or more cloud platforms belonging to a cloud provider. The cloud platform(s) may be operated by one or more different users of the services included in the system. The system may include one or more network connections 130 for communicating with one or more devices that are external to the system 100. The network connections 130 may include any one or combination of public network connections and private network connections such as a virtual private network (VPN) connection. Network connections may include various configurations and protocols including the Internet, World Wide Web, intranets, virtual private networks, wide area networks, local networks, private networks using communication protocols proprietary to one or more companies, Ethernet, WiFi (e.g., 702.71, 702.71b, g, n, or other such standards), RPC, HTTP, and various combinations of the foregoing. Additionally, the one or more external devices may include one or more client devices 140 belonging to various users of the system 100.

In the example of Fig. 1, one of the services shown as being included in the system 100 is a cloud name evaluation service 150. The cloud name evaluation service 150 may be configured to receive candidate cloud names for naming cloud services and cloud resources 120 included in the system 100, and may evaluate whether each candidate name is acceptable for use in the system. The evaluation process is described in greater detail herein.

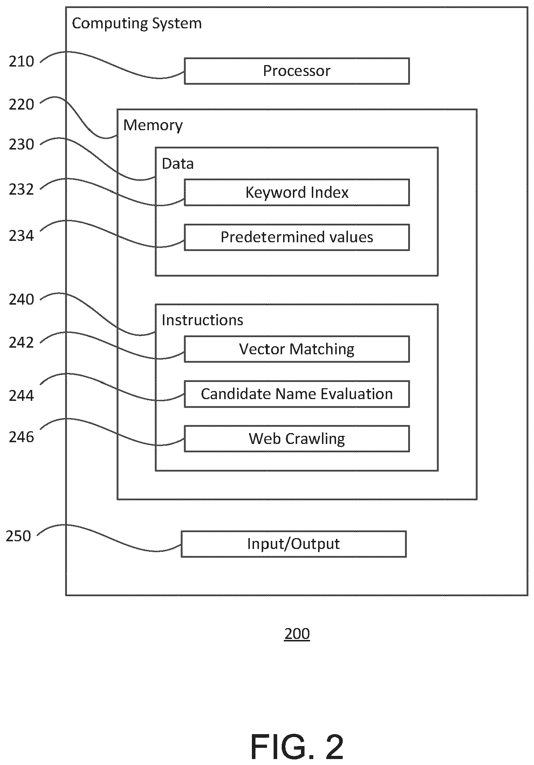

Fig. 2 is a block diagram of an example computing system 200 that may be included in the system 100 of Fig. 1. The computing system 200 may include a processor 210, memory 220, and other components typically present in cloud-based computing systems.

The processor 210 can be a well-known processor or other lesser-known types of processors. Alternatively, the processor 210 can be a dedicated controller such as an ASIC.

The memory 220 can store information accessible by the processor 210, including data 230 that can be retrieved, manipulated or stored by the processor 210. Memory 220 can also include instructions 240 that can be executed by the processor 210. The memory 220 may be a type of non-transitory computer readable medium capable of storing information accessible by the processor 210, such as a hard-drive, solid state drive, tape drive, optical storage, memory card, ROM, RAM, DVD, CD-ROM, write-capable, and read-only memories.

The data 230 can be retrieved, stored or modified by the processor 210 in accordance with the instructions 240. For instance, although the system and method is not limited by a particular data structure, the data 230 can be stored in computer registers, in a data store as a structure having a plurality of different fields and records, documents, or buffers. The data 230 can also be formatted in a computer-readable format such as, but not limited to, binary values, ASCII or Unicode. Moreover, the data 230 can include information sufficient to identify relevant information, such as numbers, descriptive text, proprietary codes, pointers, references to data stored in other memories, including other network locations, or information that is used by a function to calculate relevant data.

The data 230 may store various tables and values, such as but not limited to a keyword index 232 indicating key words and phrases that may be restricted for use in naming of cloud resources, and a predetermined threshold value 234 that may be used to evaluate the semantic similarity between a proposed resource name and any data item included in the keyword index 232. For instance, and as described in greater detail herein, the proposed name could be rejected when a value indicating the semantic similarity is greater than the threshold value.

The instructions 240 can be a set of instructions executed directly, such as machine code, or indirectly, such as scripts, by the processor 210. In this regard, the terms "instructions," "steps", and "programs" can be used interchangeably herein. The instructions 240 can be stored in object code format for direct processing by the processor 210, or other types of computer language including scripts or collections of independent source code modules that are interpreted on demand or compiled in advance.

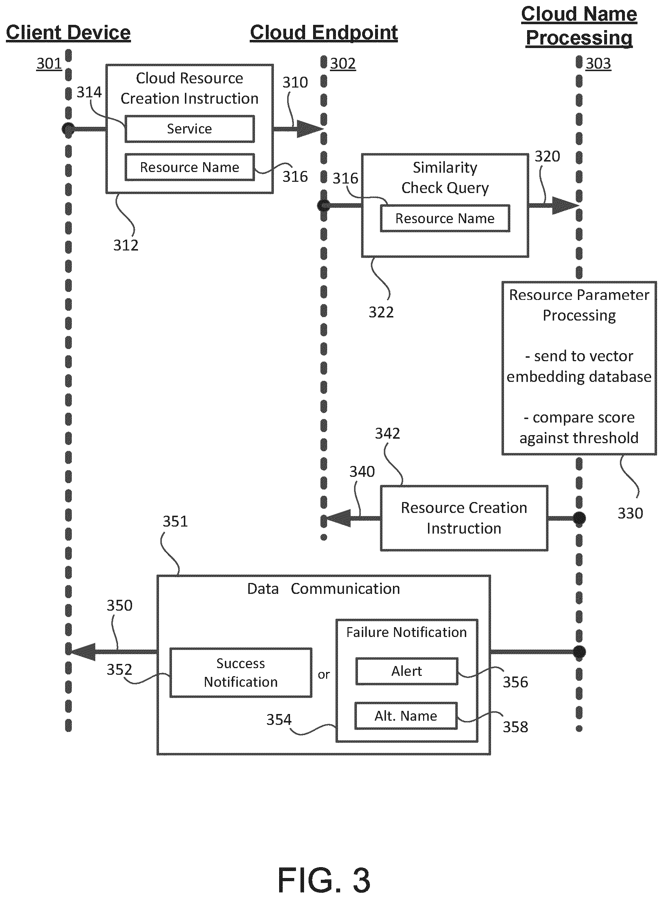

The instructions 240 may include various algorithms for instructing the processor 210 to execute operations in accordance with the routines described herein. For example, the instructions 240 may include a vector matching routine 242 for evaluating semantic similarity between different words or phrases. For further example, the instructions may include a candidate name evaluation routine 244 for determining whether to permit or restrict a proposed resource name and to take appropriate action based on the determination, as described in more detail herein. In some examples, the instructions may further include a web crawling routine 246 for obtaining keywords for the candidate name evaluation. These routines and others are described in greater detail in connection with the flow diagrams of Figs. 3-6. It should be understood that the routines described herein are merely examples, and in other examples, certain steps may be added, subtracted, replaced or reordered.

Although Fig. 2 functionally illustrates the processor 210 and memory 220 as being within the same block, the processor 210 and memory 220 may actually include multiple processors and memories that may or may not be stored within the same physical housing. For example, some of the data 230 and instructions 240 can be stored on a removable CD-ROM and others within a read-only computer chip. Some or all of the instructions and data can be stored in a location physically remote from, yet still accessible by, the processor 210. Similarly, the processor 210 can actually include a collection of processors, which may or may not operate in parallel.

The computing system 200 may include a number of other devices in addition to the processor and storage devices, such as communication devices 250 to enable input and output between computing devices, such as cabling, routers, etc. The communication devices 250 may facilitate communication between the computing system 200 and a user device or other remote device in communication with the data center, and may be capable of transmitting data to and from other computers such as modems (e.g., dial-up, cable, or fiber optic) and wireless interfaces. For example, the computing system 200 and other servers and processors of the data center may receive communications via a network connection, such as through the Internet, World Wide Web, intranets, virtual private networks, wide area networks, local networks, private networks using communication protocols proprietary to one or more companies, Ethernet, WiFi (e.g., 702.71, 702.71b, g, n, or other such standards), RPC, HTTP, and various combinations of the foregoing.

Fig. 3 is a flow diagram illustrating an example flow of data and instructions within the system of Figs. 1 and 2. In the example of Fig. 3, the data and instructions are shown as being passed among a client device 301, which may be comparable to the client device 140 shown in Fig. 1, a cloud endpoint 302, which may be comparable to the cloud endpoint 110 shown in Fig. 1, and a cloud name processing service 303, which may be comparable to the cloud name evaluation service 150 shown in Fig. 1. The cloud name processing service 303 may be implemented as a cloud application programming interface (API) to communicate and transfer information between the cloud endpoint 302, cloud services, and associated resources used by the system for processing a proposed cloud name to check whether it is acceptable or should be restricted. Referring to the example of Fig. 2, this may include the vector matching routine 242 and the candidate name evaluation routine 244.

In the example of Fig. 3, operations may begin at arrow 310 with the client device 301 transmitting a cloud resource creation instruction 312 to the cloud platform. The cloud resource creation instruction 312 may include certain parameters, specify certain details, or both. For example, the cloud resource creation instruction 312 may specify a service 314 that an end user of the client device 301 wishes to create or of which to provide the resource. The particular service specified in the cloud resource creation instruction 312 may indicate the particular cloud endpoint 302 to which the cloud resource creation instruction 312 should be directed. For further example, the cloud resource creation instruction 312 may include a resource name parameter 316 indicating a name for the new resource proposed by the end user. The cloud resource creation instruction 312 may include additional parameters depending on the particular types of resources being created.

At arrow 320, the cloud endpoint 302 may direct a similarity check query 322 to the cloud name processing service 303. The similarity check query 322 may include the resource name parameter 316 received in the cloud resource creation instruction 312.

At block 330, the cloud name processing service 303 may conduct processing of the resource name parameter 316. The processing may involve communicating the resource name parameter 316 to a vector embedding database that includes a list or table of keywords and phrases, receiving back a score indicating a semantic similarity of the resource name parameter 316 to the keywords and phrases included in the database. The scoring process is described in greater detail herein. The processing may also include comparing the received score to a threshold value or range to evaluate whether the proposed resource name indicated by the resource name parameter 316 is accepted or rejected for use in the system. In some examples where the proposed resource name indicated by the resource name parameter 316 is rejected for use in the system, the processing may further involve a subsequent step of generating an alternative resource name that is acceptable for use in the system. The alternative resource name may be selected for a static list of sample names, randomly generated, generated based on available information, provided to the vector embedding database for processing to determine whether the alternative resource name is acceptable for use in the system, or any combination of the above processes.

At arrow 340, the cloud name processing service 303 may direct a resource creation instruction 342 to the cloud endpoint 302. In the event the proposed resource name indicated by the resource name parameter 316 is accepted for use in the system, the resource creation instruction 342 may provide instructions for the cloud endpoint 302 to continue with creation of the requested resource for the specified cloud service. In some example systems, directing the resource creation instruction 342 may be made conditional on acceptance of the proposed resource name. Alternatively, in other examples, the resource creation instruction 342 may always be directed to the cloud endpoint 302. For instance, in a scenario where the proposed resource name indicated by the resource name parameter 316 is rejected for use in the system, the resource creation instruction 342 could direct the cloud endpoint 302 to cease with creation of the requested resource for the specified cloud service.

In some example embodiments, the cloud name processing service 303 may further communicate with the client device 301 to provide updates and other information regarding the progress of processing the resource name parameter 316. For instance, at arrow 350, the cloud name processing service 303 may direct a data communication 351 to the client device 301. In the event the proposed resource name indicated by the resource name parameter 316 is accepted for use in the system, the data communication may be a success notification 352 and may include a success notification message. Alternatively, in the event that the proposed resource name indicated by the resource name parameter 316 is rejected for use in the system, the data communication 351 may be a failure notification 354 and may include an alert 356 that the proposed resource name was rejected, and may optionally indicate a reason for the rejection, such as that the proposed resource name poses an increased risk to security. Additionally, or alternatively, the failure notification 354 may include an alternative name 358 for naming the requested cloud resource, which may be accepted or rejected by the client device (the communication for accepting/rejecting the alternative name is not shown).

### Example Methods

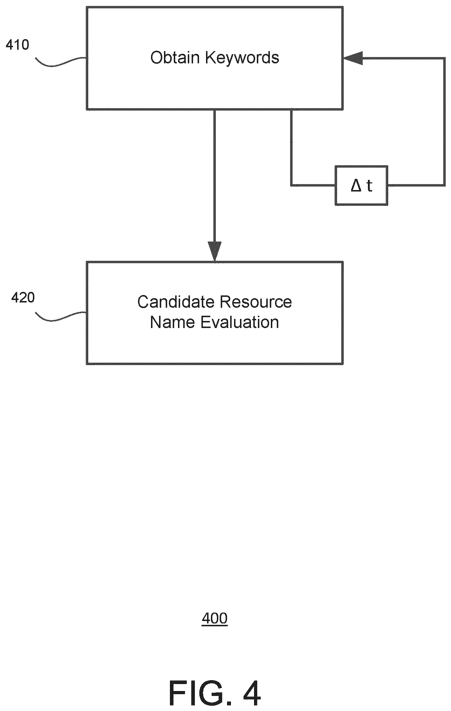

Fig. 4 is a high-level block flow diagram illustrating an example routine 400 in accordance with the present disclosure. The operations performed in the example routine 400 may be carried out by the various components of the system shown in Figs. 1-3.

At block 410, a set of keywords is obtained. The keywords may be any word or phrase that relates to data processed by the services of a cloud system. Such words and phrases may be identified based on both external and internal information. Examples of external information may include public data, such as information from a cloud user's publically available website or other websites known to be related to the cloud user. In the context of the present disclosure, the term "user" should be understood to include either or both individual users, groups of individual users, an organization, or other entity that may be characterized as a service or platform user.

Examples of internal information may include the cloud user's internal information systems, such as collaboration tools, project management tools, educational tools, and storage and sharing management tools, used by the cloud user. More specifically, information collected from collaboration tools may include information from internal messaging platforms, internal meeting services, collaborative document editing tools, and so on. Information collected from project management tools may include information from visual and data-based project management tools, task managing and organization services and platforms, software development tracking resources, and other work and workflow management platforms. Information collected from educational tools may include information stored in learning management systems and information contained in training materials. Information collected from storage and sharing management tools may include information from internal file storage solutions. The internal information may generally further include information collected from the cloud user's intranet.

Although each of the identified keywords may be included in the cloud user's internal and external information, it should be recognized that not all words and phrases included in the available information are necessarily keywords. Instead, the information may be processed to derive the keywords, whereby the words and phrases in the available information are effectively filtered to arrive at a more useful list of sensitive words and phrases.

At block 420, a candidate resource name evaluation is executed. The candidate resource name evaluation may be prompted by a user query, which may be received from an account of the cloud user. It should be noted that a given cloud user may include multiple accounts, such as an organization associated with multiple user accounts. In some systems, the user query may be received from a service account of the cloud user. The candidate resource name evaluation evaluates whether a resource name proposed by a cloud user is acceptable for use. The evaluation may involve a comparison of the proposed resource name to each keyword included in the set of keywords obtained at block 410. For any given keyword included in the set of keywords, acceptability of the proposed resource name may depend on the degree of semantic similarity of the proposed resource name to the given keyword. In such a case, if any of the keywords are found to have a high enough degree of semantic similarity to the proposed resource name, this may indicate that the proposed resource name contains a sensitive word or phrase that could increase a security risk for the cloud user.

In the example of Fig. 4, the operations of block 410 may be executed repeatedly, such as on a regular or scheduled basis, such as after the passage of a predetermined amount of time Δt. The operations of block 420 may be on-demand, such as in response to receiving a user request containing a candidate name for a cloud resource. It should be recognized that in other implementations, the operations of either block may be either scheduled or on-demand. In the case of obtaining keywords, a cloud user may initiate this operation at any time to update the set of keywords. Conversely, in the case of evaluating resource names, a system could hypothetically re-evaluate resource names that have already been adopted. Such an evaluation may be desirable when first implementing this technology on an already existing cloud platform, or after significant changes to the available content of the user's public and private data.

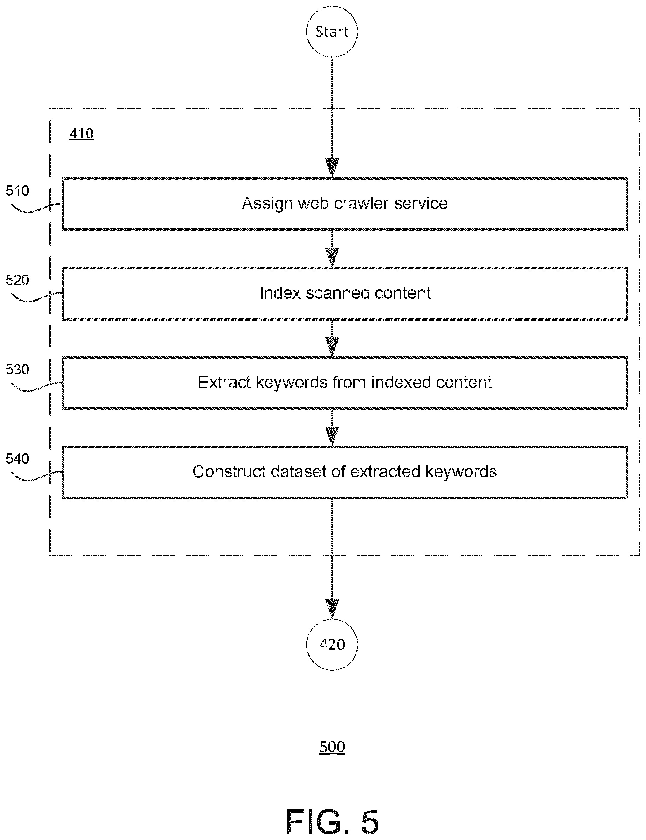

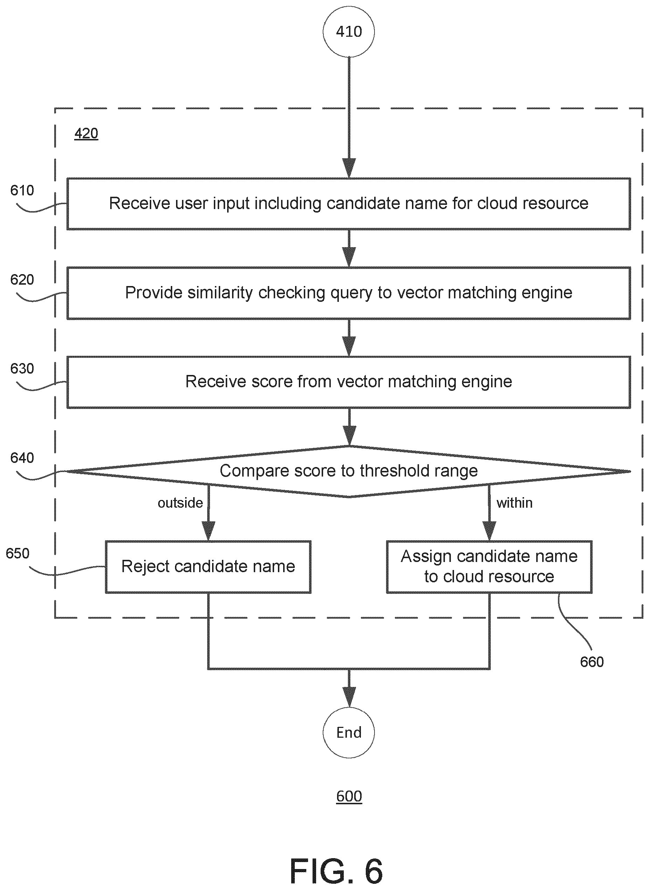

Each of blocks 410 and 420 are described in greater detail in the flow diagrams of Figs. 5 and 6.

Fig. 5 is a block diagram illustrating an example subroutine 500 for executing the keyword-obtaining operations of block 410 in Fig. 4. Operations may begin at block 510 by assigning a web crawler service to crawl and scan internal and external information. In some implementations, the web crawler service may be a service included in the cloud system. In other implementations, the web crawler service may operate separately from the cloud system, but may have access to the cloud resources of the cloud system in order to crawl and scan the internal services. The goal of the web crawler service is to detect any words, phrases, project names, people's names, and so on, that exist within the external and internal information of the scanned locations. As noted herein, scanned locations may include private locations such as on an intranet, as well as public locations such as on the Internet. Additionally, at block 520, the scanned content may be indexed. The indexing may also be performed by the web crawler service or by a separate service for processing the scanned information.

Operations may continue at block 530 by extracting one or more keywords from the indexed content. The goal of extraction is to whittle down the corpus of collected information into a more limited and more useful list of sensitive words and phrases. There are many known ways of extracting keywords from a large amount of information. As an example, one example is Rapid Automatic Keyword Extraction (RAKE), in which a list of stopwords and phrase delimiters are used to find the most relevant words and phrases in a piece of text. Additionally or alternatively, machine learning algorithms may ingest the corpus of scanned information and output the list of keywords. Some example machine learning algorithms that may be used for this purpose include supervised learning algorithms that are trained on a pre-labeled dataset for which keywords have already been manually determined. Other example machine learning algorithms that may be used for extraction include unsupervised methods, in which keywords may be detected from the corpus of text without prior training or pre-labeled data. Some examples of unsupervised methods that may facilitate keyword extraction include, but are not limited to, linguistic-based methods, graph-based methods, ensemble methods, or some combination thereof. Additionally or alternatively, many natural language processing tools can be useful for extracting keywords from text.

Operations may continue at block 540 by constructing the dataset of keywords from the extracted one or more keywords. Constructing the dataset may involve inserting the keywords into a vector embedding database, in which the meanings and relationships between words of the scanned text may be represented mathematically. For instance, each word may be associated with a multi-dimensional vector, whereby a difference in the angle between two vectors may further represent a degree of similarity or dissimilarity between the two words. Typically, similarity and dissimilarity may be quantified by a cosine similarity value between -1 and 1, whereby -1 represents two vectors pointing in exactly opposite directions and indicates strong dissimilarity between the compared words or phrases, such as antonyms, 1 represents two vectors pointing in exactly the same direction and indicates that the compared words or phrases are identical or synonymous, and 0 represents two vectors that are perfectly orthogonal to one another and indicates that the compared words or phrases are unrelated to one another and, thus, lack similarity or dissimilarity. The keywords in the vector embedding database may be indexed to facilitate further application of the vector embedding database as described herein.

Fig. 6 is a subroutine illustrating an example subroutine 600 for executing the candidate resource name evaluation operations of block 420 in Fig. 4. Operations may begin at block 610 by receiving a user input including a candidate name for a cloud resource of the cloud system. The user input may be received from a client device of a cloud user. In one implementation, receiving the user input may involve receiving a cloud API request. The API request may be directed to a particular cloud endpoint to which the cloud resource is assigned.

Operations may continue at block 620 by providing a similarity check query to a vector matching engine containing a dataset of keywords derived from cloud system, with the similarity check query including the candidate name. The similarity check may involve an evaluation of the candidate name with each keyword included in the dataset of keywords. For each keyword, a degree of similarity between the keyword and the candidate name may be determined. Then, the keyword for which the degree of similarity is highest may be determined.

Operations may continue at block 630 by receiving a score from the vector matching engine, the score indicating a degree of similarity between the candidate name and at least one keyword of the dataset contained in the vector matching engine. Determining the score may be based on the degree of similarity of the specific keyword for which the degree of similarity was determined to be highest. For instance, in the case of the vector matching engine, the score may be derived from the cosine similarity between the candidate name and the keyword. In such a case, a score of 1 would indicate that the candidate name is the keyword or synonymous to the keyword, and scores lower than 1 would indicate that the candidate name is not the keyword, but a score close to 1 may indicate a semantic similarity between the candidate name and the keyword. A score close to -1 may indicate that the candidate name is or is semantically similar to an opposite of the keyword, which, in some circumstances, may result in knowledge of the keyword, making it easier to infer the candidate name.

Operations may continue at block 640 by comparing the score to a threshold range. The threshold range may be a predetermined range. For instance, in the case of the vector matching engine, the predetermined range may be a range of values between -1 and 1 corresponding to a cosine similarity between two words or phrases for which the words or phrases are not sufficiently semantically similar enough to increase the security risk for the cloud user. In some cases, the degree of risk may vary from one user to the next, and the predetermined value may vary for those users, whereby users with greater sensitivity to risk may set boundaries of the predetermined range closer to 0 to exclude more candidate names, and users with lower sensitivity to risk may set boundaries of the predetermined range farther from 0 to avoid excluding as many candidate names.

If the score is outside of the predetermined threshold range, then operations may continue at block 650 by rejecting the candidate name. Rejecting the candidate name may involve sending a return code to the cloud endpoint to indicate failure of the API request.

Optionally, rejecting the candidate name may also involve generating an alternative name that is acceptable for the cloud resource. The alternative name may be generated using any known means, such as a random word generator or based on information about the resource other than sensitive information. Alternative names may be checked for semantic similarity just like resource names proposed by the cloud user.

Also, optionally, rejecting the candidate name may involve providing an indication of failure to the cloud user, such as by outputting an alert message to the client device of the cloud user. The alert message may further indicate the reason for the failure, such as that the candidate name is not valid. In some instances, when an alternative name for the cloud resource is generated, the alert message may further suggest the alternative candidate name, whereby the cloud user may accept or reject the alternative name.

Alternatively, if the score is within the predetermined threshold range, then operations may continue at block 660 by assigning the candidate name to the cloud resource. Assigning the candidate name to the cloud resource may involve sending a return code to the cloud endpoint indicating to continue the processing of the API request.

It should be recognized that in some circumstances, the lower boundary of the threshold range may be equal to -1. In such circumstances, candidate names that are opposites of keywords will not be treated as increasing a risk to security, and may be accepted for naming the cloud resources of the cloud system. In other circumstances, the lower boundary of the threshold range may be greater than -1, indicating that candidate names that are opposites of keywords are treated as increasing a risk to security, and may be rejected for use in naming the cloud resources. Also, for circumstances in which the lower boundary of the threshold range may be equal to -1, the predetermined threshold range may also be characterized as a threshold value representative of the upper boundary of the threshold range, whereby the threshold value implies that the predetermined threshold range includes all values between -1 and the threshold value.

It should also be recognized that the absolute value of the lower boundary of the predetermined threshold range may equal, but does not have to equal, to the absolute value of the upper boundary of the predetermined threshold range. Stated another way, the system may be arranged to treat semantically similar and semantically dissimilar (e.g., opposite) words and phrases with the same, or with different, levels of sensitivity. Using different levels of sensitivity may be advantageous in some circumstances, such as when it is harder to infer the relevance of a cloud resource named similarly to an antonym of a keyword than to infer the relevance of a cloud resource named similarly to a synonym of a keyword.

The example systems and methods generally describe the evaluation of names for cloud resources in a cloud system. However, it should be recognized that the same or similar principles may be applied to other types of system resources that are not cloud resources, such as computing resources generally or storage resources generally. In such examples, the keyword dataset may be constructed from either one or both of cloud-based information and other information, and names for any system resources can be restricted based on the keywords in the dataset using the same principles as described herein.

The methods and systems of the present disclosure may be useful for any cloud user with a need or desire to shield sensitive projects from malicious actors. For instance, established customers with known brands, products name, projects, and so on, can leverage the technology to automatically obfuscate cloud resource names for sensitive projects that contain private information or important processing tasks, thereby hardening their security by making any malicious actor's task of identifying sensitive information within the system more difficult and more time consuming.

Although the technology herein has been described with reference to particular embodiments, it is to be understood that these embodiments are merely illustrative of the principles and applications of the present technology. It is, therefore, to be understood that numerous modifications may be made to the illustrative embodiments, and that other arrangements may be devised without departing from the spirit and scope of the present technology as defined by the appended claims.

Most of the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. As an example, the preceding operations do not have to be performed in the precise order described above. Rather, various steps can be handled in a different order, such as reversed, or simultaneously. Steps can also be omitted unless otherwise stated. In addition, the provision of the examples described herein, as well as clauses phrased as "such as," "including", and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method comprising:
receiving a user input including a candidate name for a system resource of a system;
providing a similarity check query to a vector matching engine containing a dataset of keywords derived from the system, the similarity check query including the candidate name;
receiving a score from the vector matching engine, the score indicating a degree of similarity between the candidate name and at least one keyword of the dataset contained in the vector matching engine;
comparing the score to a predetermined threshold range; and
rejecting the candidate name in response to the score being outside the predetermined threshold range.

2. The method of claim 1,
wherein receiving the user input comprises receiving an application programming interface, API, request at an endpoint to which the system resource is assigned, and
wherein rejecting the candidate name comprises sending a return code to the endpoint, the return code indicating failure of the API request.

3. The method of claim 1 or 2, further comprising executing, by the vector matching engine, a similarity check in response to the similarity check query, wherein executing the similarity check comprises:
for each keyword included in the dataset of keywords, determining a degree of similarity between the keyword and the candidate name;
determining a keyword for which the degree of similarity is highest; and
determining the score based on the degree of similarity of the determined keyword.

4. The method of one of claims 1 to 3,
wherein the user input is received from a client device, and wherein the method further comprises outputting an alert message to the client device, the alert message indicating that the candidate name is invalid; and
wherein, optionally, the alert message further includes an alternative candidate name that, when provided to the vector matching engine, returns a score that is within the predetermined threshold range.

5. The method of one of claims 1 to 4, further comprising:
receiving a second user input including a second candidate name for the system resource;
providing the second candidate name to the vector matching engine;
receiving a second score from the vector matching engine, the second score indicating the degree of similarity between the second candidate name and at least one keyword of the dataset contained in the vector matching engine;
comparing the second score to the predetermined threshold range; and
assigning the candidate name to the system resource in response to the score being within the predetermined threshold value;
optionally:
wherein receiving the user input comprises receiving an application programming interface, API, request at an endpoint to which the system resource is assigned, and
wherein assigning the candidate name to the system resource comprises sending a return code to the endpoint indicating to continue the processing of the API request.

6. The method of one of claims 1 to 5, further comprising constructing the dataset of keywords derived from at least one of the system and one or more resources external to the system.

7. The method of one of claims 1 to 5, wherein the dataset of keywords are derived at least in part from the one or more services included in the system.

8. The method of claim 6, wherein constructing the dataset of keywords comprises:
assigning a web crawler service to scan at least one of the system and one or more resources external to the system;
receiving indexed content scanned by the web crawler service; and
extracting one or more keywords from the indexed content; and
constructing the dataset of keywords from the extracted one or more keywords.

9. The method of claim 8,
wherein extracting one or more keywords from the indexed content comprises at least one of the following solutions:
a rapid automatic keyword extraction, RAKE, algorithm;
a machine learning algorithm trained on a prelabeled dataset manually annotated with relevant keywords;
an unsupervised machine learning algorithm; or
a natural language processing tool; and/or
wherein the method further comprises, at a time after constructing the dataset of keywords, updating the dataset of keywords by repeating the assigning of the web crawler service, the receiving of the indexed content, and the extracting of one or more keywords from the indexed content.

10. A system comprising:
one or more processors; and
memory having stored thereon instructions that, when executed, cause the one or more processors to:
receive a user input including a candidate name for a system resource of a system;
provide a similarity check query to a vector matching engine containing a dataset of keywords derived from system, the similarity check query including the candidate name;
receive a score from the vector matching engine, the score indicating a degree of similarity between the candidate name and at least one keyword of the dataset contained in the vector matching engine;
compare the score to a predetermined threshold range;
reject the candidate name in response to the score being outside the predetermined threshold range; and
assign the candidate name to the system resource in response to the score being within the predetermined threshold range.

11. The system of claim 10, wherein the similarity check query is configured to cause the vector matching engine to:
for each keyword included in the dataset of keyword, determine a degree of similarity between the keyword and the candidate name;
determine a keyword for which the degree of similarity is highest; and
determine the score based on the degree of similarity of the determined keyword.

12. The system of claim 10 or 11,
wherein the instructions cause the one or more processors to output an alert message to the client device in response to the score being outside the predetermined threshold range, the alert message indicating that the candidate name is invalid; and
wherein, optionally, the alert message further includes an alternative candidate name that, when provided to the vector matching engine, returns a score that is within the predetermined threshold range.

13. The system of one of claims 10 to 12, wherein the instructions cause the one or more processors to:
assign a web crawler service to scan internal services of the system;
receive indexed content of the internal services from the web crawler service; and
extract one or more keywords from the indexed content; and
construct the dataset of keywords from the extracted one or more keywords; and
wherein, optionally, the instructions cause the one or more processors to extract one or more keywords from the indexed content using at least one of the following solutions:
a rapid automatic keyword extraction, RAKE, algorithm;
a machine learning algorithm trained on a prelabeled dataset manually annotated with relevant keywords;
an unsupervised machine learning algorithm; or
a natural language processing tool.

14. A cloud platform comprising:
a plurality of cloud endpoints, each cloud endpoint configured to perform a respective cloud service;
cloud resources, wherein each cloud resource is assigned to a respective cloud endpoint for performing the respective cloud service of the respective cloud endpoint; and
a cloud name evaluation service configured to:
receive a user input including a candidate cloud resource name;
provide a similarity check query to a vector matching engine containing a dataset of keywords derived from cloud system, the similarity check query including the candidate cloud resource name;
receive a score from the vector matching engine, the score indicating a degree of similarity between the candidate cloud resource name and at least one keyword of the dataset contained in the vector matching engine; and
accepting or rejecting the candidate cloud resource name for use in the cloud platform based on the score.

15. The cloud platform of claim 14,
wherein the user input further specifies a could resource endpoint to which the cloud resource is to be assigned, and
wherein the cloud name evaluation is further configured to transmit an instruction to the specified cloud resource endpoint to continue or stop generating the cloud resource with the candidate cloud resource name based on whether the candidate cloud resource name is accepted or rejected.
